# EUROPÄISCHE PATENTSCHRIFT

(11) **EP 2 260 680 B1**
(45) Veröffentlichungstag und Bekanntmachung des Hinweises auf die Patenterteilung: **19.09.2018**
(21) Anmeldenummer: 09727474.0
(22) Anmeldetag: 03.04.2009
(51) Int. Cl.: H05B 37/02, G06F 3/14, H05B 33/08

(54) **BELEUCHTUNGSANORDNUNG MIT MEHREREN SEPARATEN BELEUCHTUNGSEINHEITEN**
LIGHTING ARRANGEMENT HAVING MULTIPLE SEPARATE LIGHTING UNITS
DISPOSITIF D'ÉCLAIRAGE COMPORTANT PLUSIEURS UNITÉS D'ÉCLAIRAGE SÉPARÉES

(30) Priorität: 03.04.2008 DE 102008017073
(43) Veröffentlichungstag der Anmeldung: 15.12.2010
(73) Patentinhaber: Zumtobel Lighting GmbH, 6850 Dornbirn (AT)
(72) Erfinder: PETSCHULAT, Manfred, A-6922 Wolfurt (AT)
(74) Vertreter: Thun, Clemens
(86) Internationale Anmeldenummer: PCT/EP2009/002468
(87) Internationale Veröffentlichungsnummer: WO 2009/121618

(56) Entgegenhaltungen:
- US-A- 5 990 802
- US-A1- 2006 077 193
- US-A1- 2007 045 524

## Beschreibung

Die Erfindung betrifft eine Beleuchtungsanordnung mit mehreren separaten Beleuchtungseinheiten, welche jeweils eine Vielzahl einzelner Lichtquellen aufweisen, die voneinander unabhängig ein- und ausschaltbar bzw. in ihrer Helligkeit einstellbar sind, wobei die Beleuchtungseinheiten derart angeordnet sind, dass sie eine im Wesentlichen geschlossene Lichtabstrahlfläche der Beleuchtungsanordnung bilden, sowie mit einer Ansteuereinheit, welche dazu ausgebildet ist, die Beleuchtungseinheiten bzw. deren Lichtquellen entsprechend einem in einer Speichervorrichtung hinterlegten Programm anzusteuern. Weiterhin betrifft die Erfindung ein System sowie ein Verfahren zum Programmieren einer Ansteuereinheit einer solchen Beleuchtungsanordnung.

Bei einer derartigen Beleuchtungsanordnung ist im Allgemeinen die Ansteuerung vergleichsweise aufwändig. Für einen "durchschnittlichen" Nutzer der Beleuchtungsanordnung ist es daher in der Regel nur unter Schwierigkeiten und mit hohem Zeitaufwand möglich, die Beleuchtungsanordnung so anzusteuern, dass mit ihr eine bestimmte gewünschte Beleuchtung, also beispielsweise eine bestimmte Lichtsequenz bzw. Beleuchtungssequenz, erzeugt werden kann.

Aus der US 2006/0077193 A1 ist eine Beleuchtungsanordnung mit mehreren Beleuchtungseinheiten bekannt, die jeweils viele, unabhängig voneinander ansteuerbare Lichtquellen aufweisen. Die Beleuchtungseinheiten können so zusammengesetzt sein, dass sie ein großes Display ergeben. Zur Ansteuerung dient eine Konsole.

Aus der US 2007/0045524 A1 ist eine Beleuchtungsanordnung mit mehreren Beleuchtungseinheiten bekannt, die derart angeordnet sind, dass sie eine im Wesentlichen geschlossene Lichtabstrahlfläche bilden. Zur Ansteuerung dient eine Ansteuereinheit. Eine insoweit entsprechende Beleuchtungsanordnung ist auch aus der Schrift US 5,990,802 bekannt.

Der Erfindung liegt die Aufgabe zu Grunde, eine gattungsgemäße Beleuchtungsanordnung so zu verbessern, dass sich mit ihr besonders einfach und komfortabel ein neuer Lichteffekt erzeugen lässt. Eine entsprechende Aufgabe stellt sich für das entsprechende System bzw. Verfahren.

Diese Aufgabe wird mit den in den unabhängigen Ansprüchen genannten Gegenständen gelöst. Besondere Ausführungsformen sind in den abhängigen Ansprüchen angegeben.

Gemäß der Erfindung ist eine Beleuchtungsanordnung vorgesehen, die mehrere separate Beleuchtungseinheiten aufweist, welche jeweils eine Vielzahl einzelner Lichtquellen aufweisen; die Lichtquellen sind dabei voneinander unabhängig ein- und ausschaltbar bzw. in ihrer Helligkeit einstellbar; die Beleuchtungseinheiten sind derart angeordnet sind, dass sie eine im Wesentlichen geschlossene Lichtabstrahlfläche der Beleuchtungsanordnung bilden; weiterhin weist die Beleuchtungsanordnung eine Ansteuereinheit auf, welche dazu ausgebildet ist, die Beleuchtungseinheiten bzw. deren Lichtquellen entsprechend einem in einer Speichervorrichtung hinterlegten Programm anzusteuern. Die Ansteuereinheit weist dabei Schnittstellenmittel zur externen Übermittlung von Programmen zur Ansteuerung der Beleuchtungseinheiten bzw. deren Lichtquellen auf.

Durch die Schnittstellenmittel wird es einem Nutzer der Beleuchtungsanordnung ermöglicht, auf besonders einfache und schnelle Weise ein neues Programm in der Speichervorrichtung zu hinterlegen, so dass mit der Beleuchtungsanordnung eine neue Lichtsequenz bzw. Beleuchtungssequenz erzeugt werden kann. Insbesondere ist es für den Nutzer dabei nicht erforderlich, eigene Programmierarbeit zu leisten. Für Nutzer, die selbst nicht entsprechend programmieren können oder wollen, ist damit eine Beschränkung der Ansteuerung der Beleuchtungsanordnung auf eine Ansteuerung gemäß den bereits in der Speichervorrichtung hinterlegten Programmen, aufgehoben. Somit wird es für den Nutzer möglich, auf besonders einfache und komfortable Weise einen neuen Lichteffekt von der Beleuchtungsanordnung erzeugen zu lassen.

Vorteilhaft weisen die Beleuchtungseinheiten jeweils ein Gehäuse mit einer Lichtaustrittsfläche zur Abgabe des Lichts der Lichtquellen auf, wobei in den Lichtaustrittsflächen der Beleuchtungseinheiten jeweils ein Lichtbeeinflussungselement, insbesondere eine lichtstreuende Scheibe angeordnet ist.

Vorteilhaft umfassen die Schnittstellenmittel der Ansteuereinheit einen Anschluss, der für die Verbindung mit einem wechselbaren Speichermittel, insbesondere einer Speicher-Karte oder einem USB-Stick ausgebildet ist. Dies ist besonders handhabungsfreundlich.

Erfindungsgemäß umfassen die Programme zur Ansteuerung der Beleuchtungseinheiten bzw. deren Lichtquellen jeweils Daten zur Ansteuerung gemäß einer ersten Anordnung der Beleuchtungseinheiten sowie Daten zur Ansteuerung gemäß einer zweiten Anordnung der Beleuchtungseinheiten. Dies erleichtert einem Nutzer der Beleuchtungsanordnung die Bedienung für den Fall einer Änderung der Anordnung der Beleuchtungseinheiten.

Dabei können sich die Anordnungen der Beleuchtungseinheiten in der Feldgröße der hierdurch insgesamt gebildeten Lichtabstrahlfläche unterscheiden. Alternativ oder ergänzend können sich die Anordnungen in ihrer vorgesehenen räumlichen Orientierung unterscheiden. Weiterhin vorteilhaft weist dabei die Ansteuereinheit Erkennungsmittel zur automatischen Erkennung der Anordnung der Beleuchtungseinheiten auf. Dies macht einen entsprechenden gesonderten Bedienungsschritt für den Nutzer überflüssig.

Vorteilhaft sind die einzelnen Beleuchtungseinheiten jeweils identisch ausgebildet.

Vorteilhaft sind die Lichtquellen der einzelnen Beleuchtungseinheiten durch LEDs gebildet. Dabei können die LEDs matrixartig angeordnet sein.

Die Erfindung wird im Folgenden an Hand eines Ausführungsbeispiels und mit Bezug auf die Zeichnungen näher erläutert. Es zeigen:
- Fig. 1: eine Skizze zu Elementen eines Ausführungsbeispiels einer erfindungsgemäßen Beleuchtungsanordnung,
- Figuren 2a und 2b: Skizzen zu zwei unterschiedlichen Anordnungen von Beleuchtungseinheiten,
- Figuren 3a, und 3b: Skizzen zu zwei unterschiedlichen Anordnungen von Beleuchtungseinheiten gemäß einem zweiten Beispiel, und
- Figuren 4a und 4b: Skizzen zu zwei unterschiedlichen Anordnungen von Beleuchtungseinheiten gemäß einem dritten Beispiel.

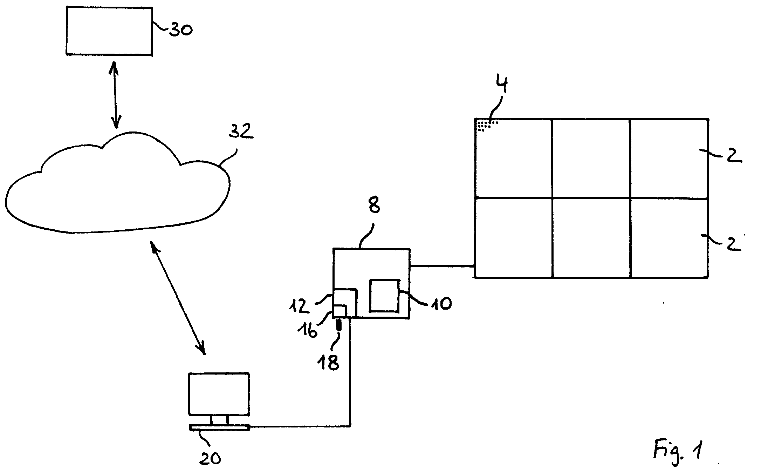

In Fig. 1 sind Elemente eines Ausführungsbeispiels einer erfindungsgemäßen Beleuchtungsanordnung skizziert. Die Beleuchtungsanordnung umfasst mehrere, im gezeigten Beispiel sechs, Beleuchtungseinheiten 2, die so angeordnet sind, dass sie eine im Wesentlichen geschlossene Lichtabstrahlfläche der Beleuchtungseinheit bilden. Die einzelnen Beleuchtungseinheiten 2 können dabei identisch ausgebildet sein.

Beim gezeigten Ausführungsbeispiel weisen die Beleuchtungseinheiten 2 jeweils ein Gehäuse mit einer Lichtaustrittsfläche zur Abgabe von Licht auf, wobei die Lichtaustrittsflächen der Beleuchtungseinheiten 2 zusammen die Lichtabstrahlfläche der Beleuchtungseinheit bilden. Die Beleuchtungseinheiten 2 können dabei insbesondere so angeordnet sein, dass die Lichtabstrahlflächen der Beleuchtungseinheiten 2 in einer Ebene liegen. In den Lichtaustrittsflächen der Beleuchtungseinheiten 2 kann jeweils ein Lichtbeeinflussungselement, beispielsweise eine lichtstreuende Scheibe angeordnet sein.

Mit "im Wesentlichen" geschlossene Lichtabstrahlfläche der Beleuchtungsanordnung soll dabei zum Ausdruck gebracht werden, dass gegebenenfalls vorhandene sichtbare Zwischenräume zwischen den Beleuchtungseinheiten 2 so klein sind, dass trotz dieser Zwischenräume mit den Beleuchtungseinheiten 2 ein insgesamt zusammenhängend erscheinender Lichteffekt erzeugt werden kann. Wenngleich in der Regel davon auszugehen ist, dass eine Breite der genannten Zwischenräume zumindest eine Größenordnung kleiner ist als eine Kantenlänge der Lichtaustrittsfläche einer der Beleuchtungseinheiten 2, so ist dennoch denkbar, dass auch Zwischenräume vorgesehen sein können, die dieselbe Größenordnung aufweisen wie eine Kantenlänge der Lichtaustrittsfläche einer der Beleuchtungseinheiten 2.

Beispielsweise kann vorgesehen sein, dass die Beleuchtungseinheiten 2 bei Blick auf die Lichtabstrahlfläche rechteckig bzw. quadratisch geformt sind. Die Beleuchtungseinheiten 2 können alle dieselbe Größe aufweisen. Eine Kantenlänge der Lichtaustrittsfläche einer Beleuchtungseinheit 2 kann beispielsweise zwischen 10 cm und 100 cm betragen. Gegebenenfalls vorhandene Zwischenräume können in diesem Fall beispielsweise zwischen 1 mm und 10 cm breit sein.

Jede der Beleuchtungseinheiten 2 weist eine Vielzahl einzelner Lichtquellen 4 auf, die voneinander unabhängig ein- und ausgeschaltet werden können bzw. in ihrer Helligkeit eingestellt werden können. In der Skizze der Fig. 1 sind die Lichtquellen 4 nur im oberen linken Eckbereich der oberen linken Beleuchtungseinheit angedeutet. Bei den Lichtquellen 4 kann es sich beispielsweise um Leuchtdioden bzw. Licht emittierende Dioden (LEDs) handeln. Dabei können die LEDs matrixartig angeordnet sein. Die Lichtaustrittsflächen der Beleuchtungseinheiten 2 dienen zur Abgabe des Lichts der Lichtquellen 4.

Weiterhin umfasst die Beleuchtungsanordnung gemäß dem gezeigten Ausführungsbeispiel eine Ansteuereinheit 8, welche dazu ausgebildet ist, die Beleuchtungseinheiten 2 bzw. deren Lichtquellen 4 entsprechend einem in einer Speichervorrichtung 10 hinterlegten Programm anzusteuern. Die Speichervorrichtung 10 kann dabei Teil der Ansteuereinheit 8 sein oder eine separate Einheit darstellen.

Die Ansteuereinheit 8 weist Schnittstellenmittel 12 zur externen Übermittlung von Programmen zur Ansteuerung der Beleuchtungseinheiten 2 bzw. deren Lichtquellen 4 auf. Beim gezeigten Ausführungsbeispiel weist die Ansteuereinheit 8 Mittel auf, ein Programm, das über die Schnittstellenmittel 12 übermittelt worden ist, in der Speichervorrichtung 10 zu speichern. Die Schnittstellenmittel 12 können dabei beispielsweise zur Verbindung mit einem PC 20 ausgelegt sein, so dass ein Programm zur Ansteuerung der Beleuchtungseinheiten 2 bzw. deren Lichtquellen 4 mithilfe des PCs 20 über die Schnittstellenmittel 12 in die Speichervorrichtung 10 gespeichert bzw. hinterlegt werden kann.

Weiterhin umfassen beim gezeigten Ausführungsbeispiel die Schnittstellenmittel 12 der Ansteuereinheit 8 einen Anschluss 16, der für die Verbindung mit einem wechselbaren Speichermittel, insbesondere einer Speicher-Karte 18 oder einem USB-Stick ausgebildet ist.

Beim gezeigten Ausführungsbeispiel umfassen die Programme zur Ansteuerung der Beleuchtungseinheiten 2 bzw. deren Lichtquellen 4 jeweils Daten zur Ansteuerung gemäß einer ersten Anordnung der Beleuchtungseinheiten 2 sowie Daten zur Ansteuerung gemäß einer zweiten Anordnung der Beleuchtungseinheiten 2.

Dabei können die beiden Anordnungen eine identische oder eine unterschiedliche Feldgröße aufweisen; mit "Feldgröße" sei dabei die Größe der von den Beleuchtungseinheiten 2 gebildeten Lichtabstrahlfläche bezeichnet.

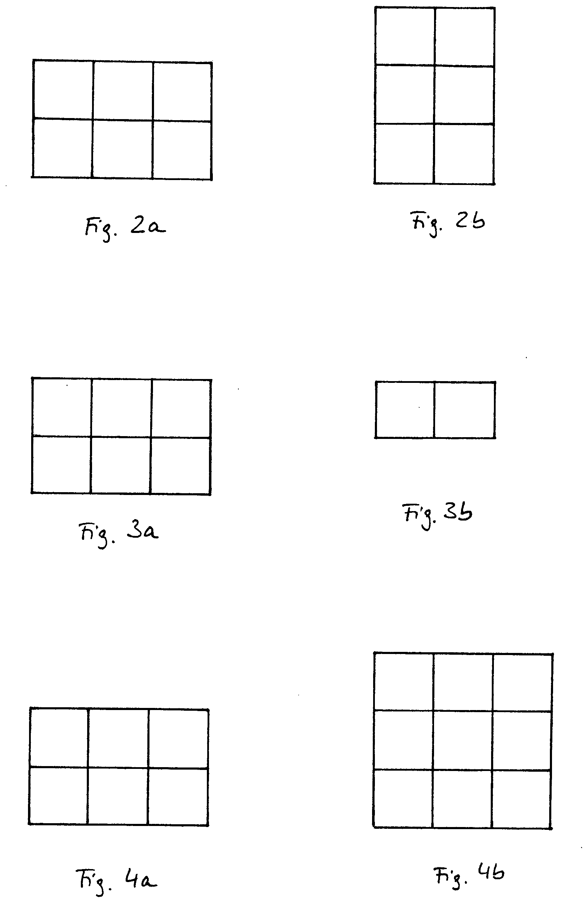

Beispielsweise kann vorgesehen sein, dass die ersten Anordnung der Beleuchtungseinheiten 2 - wie in Fig. 2a skizziert - aus sechs jeweils gleich großen Beleuchtungseinheiten besteht, wobei die Lichtabstrahlfläche ein Rechteck bildet, dessen horizontale Kantenlänge durch drei Beleuchtungseinheiten gebildet ist und dessen vertikale Kantenlänge durch zwei Beleuchtungseinheiten gebildet ist; die zweite Anordnung kann dabei - wie in Fig. 2b skizziert - aus sechs jeweils ebenso großen Beleuchtungseinheiten bestehen, wobei die Lichtabstrahlfläche ein Rechteck bildet, dessen horizontale Kantenlänge durch zwei Beleuchtungseinheiten gebildet ist und dessen vertikale Kantenlänge durch drei Beleuchtungseinheiten gebildet ist. Somit weisen die beiden Anordnungen bei diesem Beispiel unterschiedliche Orientierungen auf, unterscheiden sich jedoch nicht in der Feldgröße.

Wie in den Figuren 3a und 3b skizziert, kann die erste Anordnung wie im zuletzt genannten Beispiel vorgesehen sein, und die zweite Anordnung durch zwei Beleuchtungseinheiten, die nebeneinander angeordnet sind, so dass die beiden Anordnungen unterschiedliche Feldgrößen aufweisen.

Wie in den Figuren 4a und 4b skizziert, kann die erste Anordnung wie im zuletzt genannten Beispiel vorgesehen sein, und die zweite Anordnung durch neun Beleuchtungseinheiten, wobei die zweite Anordnung aus drei Zeilen zu je drei Beleuchtungseinheiten besteht. In diesem Fall weisen die beiden Anordnungen wiederum unterschiedliche Feldgrößen auf; insbesondere unterscheiden sie sich aber auch im Verhältnis der Kantenlängen der jeweils durch die Beleuchtungseinheiten gebildeten Lichtabstrahlfläche.

In den gezeigten Beispielen sind die einzelnen Beleuchtungseinheiten der beiden Anordnungen jeweils gleich groß. Im Allgemeinen kann aber auch vorgesehen sein, dass sich die beiden Anordnungen in der Größe einer Beleuchtungseinheit oder mehrerer Beleuchtungseinheiten unterscheidet bzw. unterscheiden.

Wenn ein Programm zur Ansteuerung der Beleuchtungseinheiten bzw. deren Lichtquellen jeweils Daten zur Ansteuerung gemäß einer ersten Anordnung und gemäß einer zweiten Anordnung umfasst, kann ein Nutzer ein Programm zur Ansteuerung der beiden unterschiedlichen Anordnungen der Beleuchtungseinheiten verwenden. Im Fall einer Veränderung der Anordnung ist somit kein separates Programm erforderlich, was die Bedienung der Beleuchtungsanordnung insgesamt vereinfacht. Besonders vorteilhaft ist es dabei, wenn die Ansteuereinheit 8 Erkennungsmittel zur automatischen Erkennung der aktuell gegebenen Anordnung der Beleuchtungseinheiten 2 aufweist. Eine entsprechende gesonderte Einstellung des Programms auf die entsprechende Anordnung ist in diesem Fall nicht mehr erforderlich. Hierbei möglicherweise auftretende Bedienungsfehler können somit ausgeschlossen werden.

Gemäß dem hier gezeigten Ausführungsbeispiel ist zum Programmieren der Ansteuereinheit 8 ein System vorgesehen, das erste Mittel zur Erzeugung einer Video- bzw. Beleuchtungssequenz aufweist, wobei die von den ersten Mitteln erstellte Video- bzw. Beleuchtungssequenz in einem ersten Datenformat, zum Beispiel dem mp4-Format, vorliegt. Weiterhin umfasst das System Umwandlungsmittel zur Umsetzung der in dem ersten Datenformat vorliegenden Video- bzw. Beleuchtungssequenz in ein von der Ansteuereinheit 8 nutzbares Programm zur Ansteuerung der Beleuchtungseinheiten 2 bzw. von deren Lichtquellen 4. Die Umwandlungsmittel können beispielsweise Teil einer zentralen Service-Einrichtung 30 sein. Außerdem umfasst das System Mittel zur Übertragung des von den Umwandlungsmitteln generierten Programms zu der Ansteuereinheit 8.

Ein Verfahren zum Programmieren der Ansteuereinheit 8 der Beleuchtungsanordnung kann also folgende Schritte umfassen:
(i) Erzeugen einer Video- bzw. Beleuchtungssequenz - im Folgenden auch kurz "Sequenz" genannt - in einem ersten Datenformat,
(ii) Umsetzen der in dem ersten Datenformat vorliegenden Sequenz in ein von der Ansteuereinheit 8 nutzbares Programm zur Ansteuerung der Beleuchtungseinheiten 2 bzw. von deren Lichtquellen 4, und
(iii) Übertragung des Programms zu der Ansteuereinheit 8.

Für den Schritt (i) kann beispielsweise vorgesehen sein, dass ein Nutzer selbst mit Hilfe einer Videokamera oder anderen Mittel, beispielsweise eines PCs 20, die Video- bzw. Beleuchtungssequenz erstellt. Als Datenformat kann dabei beispielsweise das bekannte mp4-Format oder ein vergleichbares Format dienen. Alternativ kann beispielsweise vorgesehen sein, dass die Video- bzw. Beleuchtungssequenz in der zentralen Service-Einrichtung 30 oder an einer dritten Stelle erzeugt wird.

Für den Schritt (ii) kann vorgesehen sein, dass das Umsetzen in der zentralen Service-Einrichtung 30 erfolgt. Falls die Sequenz vom Nutzer erzeugt worden ist, kann dementsprechend zuvor eine Übermittlung der Sequenz an die zentrale Service-Einrichtung 30, beispielsweise unter Zuhilfenahme des Internets oder eines tragbaren Speichermediums, vorgesehen sein.

Für den Schritt (iii) kann vorgesehen sein, dass das von der Ansteuereinheit 8 nutzbare Programm zumindest teilweise über ein Kommunikationsnetzwerk 32, beispielsweise das Internet erfolgt. Dabei kann weiterhin vorgesehen sein, dass das von der Ansteuereinheit 8 nutzbare Programm auf einen bzw. auf den PC 20 des Nutzers übertragen wird, so dass der Nutzer dann, wie weiter oben beschrieben, das Programm von dem PC 20 über die Schnittstellenmittel 12 in die Speichervorrichtung 10 weiter übertragen bzw. laden kann.

Es kann jedoch auch beispielsweise vorgesehen sein, dass das nutzbare Programm nach seiner Erzeugung, beispielsweise in der zentralen Service-Einrichtung 30, auf das wechselbare Speichermittel 18, also zum Beispiel auf die Speicherkarte oder den USB-Stick gespeichert wird und dieses Speichermittel 18 dann, zum Beispiel durch den Nutzer, mit dem Anschluss 16 der Ansteuereinheit 8 verbunden wird.

Mit dem beschriebenen System bzw. Verfahren hat der Nutzer die Möglichkeit, selbst hinsichtlich der Erzeugung einer Video- bzw. Beleuchtungssequenz kreativ zu werden, ohne sich um die Umsetzung der erzeugten Sequenz in ein von der Ansteuereinheit 8 nutzbares Programm kümmern zu müssen. Außerdem steht die Möglichkeit offen, dem Nutzer aus der zentralen Service-Einrichtung 30 ein "fertiges" Programm oder mehrere "fertige" Programme zur Verfügung zu stellen. Somit wird nicht nur die Bedienung der Beleuchtungsanordnung an sich vereinfacht, sondern es werden auch die Rahmenbedingungen bei der Erzeugung neuer Video- bzw. Beleuchtungssequenzen verbessert.

## Patentansprüche

1. Beleuchtungsanordnung, aufweisend:
• mehrere separate Beleuchtungseinheiten (2), welche jeweils eine Vielzahl einzelner Lichtquellen (4) aufweisen, die voneinander unabhängig ein- und ausschaltbar bzw. in ihrer Helligkeit einstellbar sind, wobei die Beleuchtungseinheiten (2) derart angeordnet sind, dass sie eine im Wesentlichen geschlossene Lichtabstrahlfläche der Beleuchtungsanordnung bilden, sowie
• eine Ansteuereinheit (8), welche dazu ausgebildet ist, die Beleuchtungseinheiten (2) bzw. deren Lichtquellen (4) entsprechend einem in einer Speichervorrichtung (10) hinterlegten Programm anzusteuern,
wobei die Ansteuereinheit (8) Schnittstellenmittel (12) zur externen Übermittlung von Programmen zur Ansteuerung der Beleuchtungseinheiten (2) bzw. deren Lichtquellen (4) aufweist, **dadurch gekennzeichnet dass** die Programme zur Ansteuerung der Beleuchtungseinheiten (2) bzw. deren Lichtquellen (4) jeweils Daten zur Ansteuerung gemäß einer ersten Anordnung der Beleuchtungseinheiten (2) sowie Daten zur Ansteuerung gemäß einer zweiten Anordnung der Beleuchtungseinheiten (2) umfassen.

2. Beleuchtungsanordnung nach Anspruch 1,
**dadurch gekennzeichnet,**
**dass** die Beleuchtungseinheiten (2) jeweils ein Gehäuse mit einer Lichtaustrittsfläche zur Abgabe des Lichts der Lichtquellen (4) aufweisen,
wobei in den Lichtaustrittsflächen der Beleuchtungseinheiten jeweils ein Lichtbeeinflussungselement, insbesondere eine lichtstreuende Scheibe angeordnet ist.

3. Beleuchtungsanordnung nach einem der vorherigen Ansprüche,
**dadurch gekennzeichnet,**
**dass** die Schnittstellenmittel (12) der Ansteuereinheit (8) einen Anschluss (16) umfassen, der für die Verbindung mit einem wechselbaren Speichermittel (18), insbesondere einer Speicher-Karte oder einem USB-Stick ausgebildet ist.

4. Beleuchtungsanordnung nach einem der vorherigen Ansprüche,
**dadurch gekennzeichnet,**
**dass** sich die Anordnungen der Beleuchtungseinheiten (2) in der Feldgröße der hierdurch insgesamt gebildeten Lichtabstrahlfläche unterscheiden.

5. Beleuchtungsanordnung nach einem der vorherigen Ansprüche,
**dadurch gekennzeichnet,**
**dass** die Ansteuereinheit (8) Erkennungsmittel zur automatischen Erkennung der Anordnung der Beleuchtungseinheiten (2) aufweist.

6. Beleuchtungsanordnung nach einem der vorherigen Ansprüche,
**dadurch gekennzeichnet,**
**dass** die einzelnen Beleuchtungseinheiten (2) jeweils identisch ausgebildet sind.

7. Beleuchtungsanordnung nach einem der vorherigen Ansprüche,
**dadurch gekennzeichnet,**
**dass** die Lichtquellen (4) der einzelnen Beleuchtungseinheiten (2) durch LEDs gebildet sind.

8. Beleuchtungsanordnung nach Anspruch 7,
**dadurch gekennzeichnet,**
**dass** die LEDs matrixartig angeordnet sind.

## Claims

1. A lighting arrangement, having:
• Multiple separate lighting units (2), which each have a plurality of individual light sources (4), which can be turned on and off or can be adjusted in their brightness independently of one another, wherein said lighting units (2) are arranged in such a manner that they form a substantially closed light emission surface of the lighting arrangement, as well as
• an activation unit (8), which is designed for the purpose of activating the lighting units (2) or the light sources (4) thereof according to a program stored in a storage device (10),
wherein
the activation unit (8) has interface means (12) for the external transmission of programs for activating the lighting units (2) or the light sources (4) thereof,
**characterized in that**
the programs for activating the lighting units (2) or the light sources (4) thereof each comprise data for the activation according to a second arrangement of the lighting units (2).

2. A lighting arrangement according to Claim 1,
**characterized in**
**that** the lighting units (2) each have a housing with a light exit surface for emission of the light of the light sources (4),
wherein in each case a light-influencing element, in particular, a light-diffusing disc is arranged in the light exit surfaces of the lighting units.

3. A lighting arrangement according to any one of the preceding claims,
**characterized in**
**that** the interface means (12) of the activation unit (8) comprise a connection (16) which is designed for connecting with a removable storage means (18), in particular, a memory card or a USB stick.

4. A lighting arrangement according to any one of the preceding claims,
**characterized in**
**that** the arrangements of the lighting units (2) differ in the field size of the light emission surface thus formed as a whole.

5. A lighting arrangement according to any one of the preceding claims,
**characterized in**
**that** the activation unit (8) has detecting means for automatically detecting the arrangement of the lighting units (2).

6. A lighting arrangement according to any one of the preceding claims,
**characterized in**
**that** the individual lighting units (2) are each designed identically.

7. A lighting arrangement according to any one of the preceding claims,
**characterized in**
**that** the light sources (4) of the individual lighting units (2) are formed by LEDs.

8. A lighting arrangement according to Claim 7,
**characterized in**
**that** the LEDs are arranged in a matrix-like manner.

## Revendications

1. Dispositif d'éclairage comprenant :
• plusieurs unités d'éclairage séparées (2), qui comprennent chacune une pluralité de sources de lumière individuelles (4), qui peuvent être activées ou désactivées ou bien dont la luminosité peut être réglée indépendamment les unes des autres, les unités d'éclairage (2) étant disposées de façon à former une surface d'émission de lumière globalement fermée du dispositif d'éclairage, ainsi que
• une unité de commande (8) qui est conçue pour commander les unités d'éclairage (2) ou leurs sources de lumière (4) en fonction d'un programme enregistré dans un dispositif de mémoire (10),
l'unité de commande (8) comprenant des moyens d'interface (12) pour la transmission externe de programmes pour la commande des unités d'éclairage (2) ou de leurs sources de lumière (4),
**caractérisé en ce que**
les programmes de commande des unités d'éclairage (2) ou de leurs sources de lumière (4) comprennent chacun des données pour la commande selon une première disposition des unités d'éclairage (2) ainsi que des données pour la commande selon une deuxième disposition des unités d'éclairage (2).

2. Dispositif d'éclairage selon la revendication 1,
**caractérisé en ce que**
les unités d'éclairage (2) comprennent chacune un boîtier avec une surface de sortie de lumière pour l'émission de la lumière des sources de lumière (4),
moyennant quoi, dans chacune des surfaces de sortie de lumière des unités d'éclairage, est disposé un élément influençant la lumière, plus particulièrement un disque de diffusion de lumière.

3. Dispositif d'éclairage selon l'une des revendications précédentes,
**caractérisé en ce que**
les moyens d'interface (12) de l'unité de commande (8) comprennent un raccordement (16) qui est conçu pour la liaison avec une mémoire (18) interchangeable, plus particulièrement une carte mémoire ou une clé USB.

4. Dispositif d'éclairage selon l'une des revendications précédentes,
**caractérisé en ce que**
les dispositions des unités d'éclairage (2) se distinguent par la taille du champ de la surface d'émission de lumière formée au total par celles-ci.

5. Dispositif d'éclairage selon l'une des revendications précédentes,
**caractérisé en ce que**
l'unité de commande (8) comprend des moyens de détection pour la détection automatique de la disposition des unités d'éclairage (2).

6. Dispositif d'éclairage selon l'une des revendications précédentes,
**caractérisé en ce que**
les différentes unités d'éclairage (2) sont conçues de manière identique.

7. Dispositif d'éclairage selon l'une des revendications précédentes,
**caractérisé en ce que**
les sources de lumière (4) des différentes unités d'éclairage (2) sont constituées de LED.

8. Dispositif d'éclairage selon la revendication 7,
**caractérisé en ce que**
les LED sont disposées de façon matricielle.
